# EUROPÄISCHE PATENTSCHRIFT

(11) **EP 3 394 570 B1**
(45) Veröffentlichungstag und Bekanntmachung des Hinweises auf die Patenterteilung: **17.07.2019**
(21) Anmeldenummer: 16823267.6
(22) Anmeldetag: 20.12.2016
(51) Int. Cl.: G01C 21/36

(54) **ANZEIGESYSTEM UND VERFAHREN ZUM BETREIBEN EINES ANZEIGESYSTEMS IN EINEM FAHRZEUG MIT ZUMINDEST EINER ERSTEN UND EINER ZWEITEN ANZEIGEFLÄCHE**
DISPLAY SYSTEM AND METHOD OF OPERATING A DISPLAY SYSTEM IN A VEHICLE WITH AT LEAST A FIRST AND A SECOND DISPLAY SURFACE
SYSTÈME D'AFFICHAGE ET PROCÉDÉ D'OPÉRATION D'UN SYSTÈME D'AFFICHAGE DANS UN VÉHICULE AVET AU MOINS UNE PREMIÈRE ET UNE DEUXIÈME SURFACE D'AFFICHAGE

(30) Priorität: 22.12.2015 DE 102015122599
(43) Veröffentlichungstag der Anmeldung: 31.10.2018
(73) Patentinhaber: Volkswagen Aktiengesellschaft, 38440 Wolfsburg (DE)
(72) Erfinder: KASSNER, Astrid, 10117 Berlin (DE); MEYER, Thomas, 12205 Berlin (DE)
(74) Vertreter: Reitstötter Kinzebach
(86) Internationale Anmeldenummer: PCT/EP2016/082028
(87) Internationale Veröffentlichungsnummer: WO 2017/108860

(56) Entgegenhaltungen:
- EP-A1- 1 308 695
- DE-A1-102007 018 073
- US-A1- 2008 147 321
- US-A1- 2015 233 721

## Beschreibung

Die vorliegende Erfindung betrifft ein Verfahren zum Betreiben eines Anzeigesystems in einem Fahrzeug mit zumindest einer ersten und einer zweiten Anzeigefläche. Die Erfindung betrifft ferner ein Anzeigesystem in einem Fahrzeug.

In modernen Fahrzeugen, insbesondere in Kraftfahrzeugen, ist eine Vielzahl von Einrichtungen vorgesehen, die elektronisch bedient werden können oder die Ausgabedaten erzeugen, die etwa anhand elektronischer Anzeigevorrichtungen ausgegeben werden. Dazu werden insbesondere Bildschirme verwendet. Ferner können Anzeigevorrichtungen, die herkömmlicherweise analog ausgeführt werden, durch elektronische Anzeigen ersetzt werden.

Dies führt dazu, dass häufig in einem Fahrzeug mehrere Bildschirme verwendet werden. Es ist dabei von Bedeutung, dass die auf den Bildschirmen angezeigte Information schnell und einfach erfasst werden kann. Dies ist besonders dann von Bedeutung, wenn der Fahrer die Information erfassen und dabei möglichst wenig Aufmerksamkeit vom Verkehrsgeschehen abwenden soll. Es wird angestrebt, ein einheitliches Erscheinungsbild der verschiedenen Anzeigen im Fahrzeug zu erreichen.

Die US 2008/0147321 A1 beschreibt ein Navigationssystem, dessen Ausgabedaten auf einer Anzeigefläche ausgegeben werden und bei dem Eingaben eines Nutzers erfasst werden. Dabei wird die Ausgabe regelmäßig aktualisiert, etwa um die sich verändernde Position eines Fahrzeugs darzustellen.

In der EP 1 308 695 A1 wird ein Anzeigesystem in einem Fahrzeug beschrieben, bei dem auf einen ersten und zweiten Display Bilddaten ausgegeben werden, wobei die für das eine Display bestimmte Ausgabe innerhalb des anderen Displays in einer verkleinerten Ansicht dargestellt werden kann.

Die US2015/0233721 beschreibt ein Anzeigesystem in einem Fahrzeug mit einem im Fahrzeug installierten Navigationsgerät und einer dazu beabstandet anordenbaren Anzeigefläche eines Mobilgeräts. Ein auf dem Mobilgerät angezeigter Kartenausschnitt steht in geographischer Relation zu einem auf dem Navigationsgerät angezeigten Kartenausschnitt, wobei die geographische Relation anhand der relativen Anordnung der Anzeigeflächen bestimmt wird. Ein Benutzer kann zwischen zwei Betriebsmoden wählen, wobei entweder die aktuelle Position zentriert auf dem Navigationsgerät angezeigt wird, oder eine andere Position.

Der vorliegenden Erfindung liegt die Aufgabe zugrunde, ein Anzeigesystem und ein Verfahren zum Betreiben eines Anzeigesystems bereitzustellen, wobei ein besonders leichtes und schnelles Erfassen der dargebotenen Information ermöglicht wird. Erfindungsgemäß wird diese Aufgabe durch ein Verfahren mit den Merkmalen des Anspruchs 1 und ein Anzeigesystem mit den Merkmalen des Anspruchs 11 gelöst. Vorteilhafte Ausgestaltungen und Weiterbildungen ergeben sich aus den abhängigen Ansprüchen.

Bei dem erfindungsgemäßen Verfahren zum Betreiben eines Anzeigesystems in einem Fahrzeug mit zumindest einer ersten und einer zweiten Anzeigefläche sind die Anzeigeflächen zueinander beabstandet angeordnet, und das Anzeigesystem weist einen ersten und einen zweiten Betriebsmodus auf. Bei dem Verfahren werden Navigationsdaten erfasst, und anhand der erfassten Navigationsdaten wird eine Kartendarstellung erzeugt, wobei die Kartendarstellung eine aktuelle Position des Fahrzeugs umfasst. Anhand der Kartendarstellung werden Anzeigedaten für zumindest eine erste und zweite Teilanzeige erzeugt, wobei die erste Teilanzeige durch die erste Anzeigefläche und die zweite Teilanzeige durch die zweite Anzeigefläche angezeigt wird. Dabei umfasst die erste Teilanzeige einen ersten Kartenausschnitt und die zweite Teilanzeige einen zweiten Kartenausschnitt. Der erste und der zweite Kartenausschnitt umfassen dabei verschiedene Ausschnitte der Kartendarstellung. Die Gesamtheit der beiden Kartenausschnitte bildet eine zusammenhängende Repräsentation von Daten der Kartendarstellung, wobei der erste und der zweite Kartenausschnitt zueinander in einer geographischen Relation stehen. Die geographische Relation wird anhand der relativen Anordnung der ersten zur zweiten Anzeigefläche bestimmt. In Abhängigkeit vom Betriebsmodus des Anzeigesystems wird eine der zumindest zwei Anzeigeflächen bestimmt und der Kartenausschnitt der Teilanzeige, die von der bestimmten Anzeigefläche angezeigt wird, wird so gebildet, dass der Kartenausschnitt die aktuelle Position des Fahrzeugs umfasst.

Durch das erfindungsgemäße Verfahren wird vorteilhafterweise eine inhaltlich zusammenhängende Anzeige für zwei Anzeigeflächen des Anzeigesystems erzeugt. Der inhaltliche Zusammenhang besteht in einer geeigneten Erzeugung der durch die beiden Anzeigeflächen dargestellten Kartenausschnitte, wobei sich die Anordnung der Anzeigeflächen im Fahrzeug in der geographischen Relation der dargestellten Kartenausschnitte zueinander widerspiegelt.

Beispielsweise kann eine Anzeigefläche rechts von der anderen Anzeigefläche angeordnet sein. In diesem Beispiel kann die Wahl der dargestellten Kartenausschnitte etwa so erfolgen, dass der rechts angezeigte Kartenausschnitt an einem rechten Rand des von der linken Anzeigefläche ausgegebenen Kartenausschnitts anschließt. Die Kartenausschnitte können ferner überlappen, wobei in einem Randbereich, etwa am rechten Rand der linken Anzeigefläche, und am linken Rand der rechten Anzeigefläche, Elemente der Kartendarstellung wiederholt werden.

Es ist dabei nicht notwendig, dass eine exakte Gleichheit zwischen der geographischen Relation der Kartenausschnitte und der relativen Anordnung der Anzeigeflächen besteht. Beispielsweise sind die Anzeigeflächen erfindungsgemäß zueinander beabstandet angeordnet, wobei dieser räumliche Abstand nicht durch die geographische Relation der Kartenausschnitte widergespiegelt wird. Erfindungsgemäß bildet die Gesamtheit der Kartenausschnitte eine zusammenhängende Repräsentation von Daten der Kartendarstellung, die Kartenausschnitte sind also erfindungsgemäß nicht als voneinander losgelöste und unabhängige Ausschnitte der Kartendarstellung zu verstehen.

Insbesondere kann die geographische Relation der Kartenausschnitte zueinander unverändert bleiben, auch wenn die Kartenausschnitte neu erzeugt werden, beispielsweise wenn sich das Fahrzeug bewegt und ein neuer Bereich der Kartendarstellung angezeigt werden soll. Insbesondere kann dabei die Bewegung des Fahrzeugs mit nachvollzogen werden, beispielsweise kann die Kartendarstellung eine Rotation der Bewegungsrichtung des Fahrzeugs nachvollziehen und die Kartenausschnitte können dadurch neu bestimmt werden, wobei ihre geographische Relation zueinander konstant bleibt.

Erfindungsgemäß wird ferner die aktuelle Position des Fahrzeugs angezeigt, wobei diese Anzeige einer bestimmten Anzeigefläche zugeordnet ist. Die Zuordnung erfolgt anhand des Betriebsmodus, sodass durch diesen die Aufmerksamkeit des Nutzers gelenkt werden kann. Typischerweise ist nämlich der Kartenausschnitt, der die aktuelle Position des Fahrzeugs umfasst, von besonderer Bedeutung für den Nutzer. Beispielsweise werden in der Umgebung der aktuellen Position des Fahrzeugs Orientierungspunkte oder solche Positionen angezeigt, bei denen die Fahrt des Fahrzeugs zur richtigen Routenführung angepasst werden muss. Dies erfordert besondere Aufmerksamkeit des Fahrers des Fahrzeugs, sodass häufig davon auszugehen ist, dass seine Aufmerksamkeit auf die Anzeigefläche gerichtet ist, welche die aktuelle Position des Fahrzeugs ausgibt.

Bei einer Ausbildung des erfindungsgemäßen Verfahrens wird ein Betriebsmodusänderungssignal erfasst und anhand des Betriebsmodusänderungssignals werden die erste und die zweite Teilanzeige aktualisiert. Dadurch kann vorteilhafterweise die Anzeige an äußere Bedingungen, etwa eine Fahrsituation, angepasst werden.

Bei einer weiteren Ausbildung werden die aktualisierten Teilanzeigen so gebildet, dass die aktuelle Position des Fahrzeugs durch die andere als die zunächst bestimmte Anzeigefläche angezeigt wird. Dadurch kann vorteilhafterweise anhand des Betriebsmodusänderungssignals zwischen verschiedenen Fällen umgeschaltet werden, wobei besonders wichtige Informationen, insbesondere die aktuelle Position des Fahrzeugs, jeweils durch die eine oder andere Anzeigefläche angezeigt werden.

Bei einer Weiterbildung wird das Betriebsmodusänderungssignal anhand einer Nutzereingabe erfasst, wobei die Nutzereingabe eine Betätigung eines Bedienelements oder eine Geste umfasst. Dadurch kann vorteilhafterweise auf Wunsch des Nutzers zwischen den verschiedenen Betriebsmodi umgeschaltet werden.

Unter einer "Geste" wird dabei eine bestimmte Stellung der Hand eines Nutzers oder eine bestimmte Bewegung, die mit der Hand des Nutzers ausgeführt wird, verstanden. Anstelle der Hand des Nutzers kann zudem ein anderes Betätigungsobjekt verwendet werden, etwa ein Stift. Die Geste kann nach an sich bekannter Art ausgestaltet sein. Es kann etwa eine Zeigegeste oder eine Wischgeste vorgesehen sein. Ferner können Gesten verwendet werden, die aus dem alltäglichen Gebrauch bekannt sind, zum Beispiel Handdrehungen, Greifgesten und Kombinationen mehrerer solcher gegebenenfalls unmittelbar kurz nacheinander ausgeführter Gesten. Die Gesten werden in einem Detektionsraum ausgeführt. Beispielsweise kann eine Geste in einem Raum vor einer der Anzeigeflächen ausgeführt werden. Ferner kann die Geste bei gleichzeitiger Berührung einer berührungsempfindlichen Oberfläche vorgenommen werden, etwa durch Streichen mit der Hand über eine berührungsempfindliche Oberfläche eines Touchscreens. Durch die Steuerung mittels Gesten wird dem Nutzer eine besonders einfache und intuitive Eingabemöglichkeit zur Steuerung des Anzeigeinhalts im Anzeigebereich oder von den dazugehörigen Einrichtungen bereitgestellt.

Die Nutzereingabe kann alternativ oder zusätzlich eine Spracheingabe oder eine Betätigung eines Betätigungselements umfassen.

Bei einer weiteren Ausgestaltung wird das Betriebsmodusänderungssignal anhand von Fahrparametern automatisch erzeugt. Dadurch kann vorteilhafterweise der Betriebsmodus an die aktuelle Fahrsituation angepasst werden. Insbesondere erfordert in diesem Fall das Umschalten keine Handlung des Nutzers, sodass die Aufmerksamkeit des Nutzers weniger stark beansprucht wird.

Die Fahrparameter können beispielsweise eine Geschwindigkeit, eine Beschleunigung, eine Fahrtrichtung, eine Position und/oder weitere Parameter des Fahrzeugs und der Bewegung des Fahrzeugs umfassen. Als Fahrparameter können ferner Daten eines Navigationsgeräts erfasst werden, wobei die Daten des Navigationsgeräts zum Beispiel Fahranweisungen umfassen können. So kann zum Beispiel erfasst werden, wann die nächste Fahranweisung ausgegeben und ausgeführt werden soll. Soll eine solche Fahranweisung erst zu einem deutlich späteren als dem aktuellen Zeitpunkt ausgeführt werden, so ist beispielsweise typischerweise davon auszugehen, dass die Routenführung geringe Aufmerksamkeit des Fahrers beansprucht, und dass daher die Anzeigefläche, durch die die aktuelle Position des Fahrzeugs angezeigt wird, gewechselt werden kann.

Bei einer Weiterbildung werden durch die zumindest zwei Anzeigeflächen ferner Anwendungsdaten ausgegeben, wobei die ausgegebenen Anwendungsdaten in Abhängigkeit von dem Betriebsmodus des Anzeigesystems gebildet werden. Dadurch können vorteilhafterweise die Anzeigeflächen genutzt werden, um zusätzlich zu den Kartenausschnitten Ausgabedaten von anderen Einrichtungen des Fahrzeugs anzuzeigen.

Insbesondere kann dabei anhand des Betriebsmodus bestimmt werden, welche Anwendungsdaten von welchen Einrichtungen und Anwendungen des Fahrzeugs ausgegeben werden sollen. Dabei kann berücksichtigt werden, welche der Anzeigeflächen die Teilanzeige mit der aktuellen Position des Fahrzeugs anzeigt. Unter der Annahme, dass die Aufmerksamkeit des Nutzers besonders auf die Anzeigefläche gerichtet ist, welche die aktuelle Position des Fahrzeugs anzeigt, so kann die Auswahl der angezeigten Anwendungsdaten auch anhand der Aufmerksamkeit des Nutzers durchgeführt werden.

Bei einer Ausbildung des erfindungsgemäßen Verfahrens umfassen die Anwendungsdaten eine Fahranweisung. Die Fahranweisung wird insbesondere durch ein Navigationsgerät des Fahrzeugs erzeugt. Dadurch kann vorteilhafterweise zusätzlich zu der Kartendarstellung eine Ausgabe konkreter Hinweise zu Fahrmanövern erfolgen, die zum Steuern des Fahrzeugs entlang einer geplanten Route erforderlich sind.

Dabei besteht typischerweise ein enger inhaltlicher Zusammenhang zwischen der Kartendarstellung und den Fahranweisungen, wobei erstere die Orientierung auf der Route und in der Umgebung der Route erleichtert und letztere konkrete Handlungsanweisungen für das Führen des Fahrzeugs umfassen.

Insbesondere können die Betriebsmodi des Anzeigesystems einen Fahrmodus und einen Reisemodus umfassen. Dabei kann etwa der Fahrmodus so definiert sein, dass eine Teilanzeige besonders viele Informationen zum Fahren entlang der Route ausgibt. Insbesondere kann diese Teilanzeige die aktuelle Position des Fahrzeugs sowie Fahranweisungen umfassen. Gleichzeitig kann die andere Teilanzeige einen Kartenausschnitt in der Peripherie der aktuellen Position des Fahrzeugs anzeigen, wobei gleichzeitig Anwendungsdaten von allgemeinem Interesse angezeigt werden, beispielsweise Medien, Nachrichten, Fahrzeugdaten und andere. Ferner kann eine reduzierte Bedienung der dargestellten Anwendungen durch Anzeigefenster innerhalb der Teilanzeige ausgeführt werden. Es kann ferner ein Aufruf einer ausführlicheren Bedienung vorgesehen sein.

Der Reisemodus kann dagegen so ausgestaltet werden, dass die aktuelle Position des Fahrzeugs auf der anderen Anzeigefläche zusammen mit Anwendungsdaten angezeigt wird, die inhaltlich mit der befahrenen Route zusammenhängen. Auf der ersten Anzeigefläche, auf der im Fahrmodus die aktuelle Position angezeigt wird, kann im Reisemodus der dort angezeigte Kartenausschnitt die Peripherie der aktuellen Position des Fahrzeugs umfassen. Ferner kann hier beispielsweise eine Ausgabe von Fahrhinweisen erfolgen.

Bei einer Ausbildung werden der erste und zweite Kartenausschnitt ferner in Abhängigkeit von Parametern der Bewegung des Fahrzeugs bestimmt. Dadurch kann vorteilhafterweise berücksichtigt werden, wie sich das Fahrzeug bewegt.

Insbesondere können ein Maßstab, ein Vergrößerungsfaktor, eine Blickrichtung und/oder ein Maß für den angezeigten Detailreichtum für die Kartenausschnitte angepasst werden. Die Kartenausschnitte können dabei von Parametern der Bewegung des Fahrzeugs abhängen, beispielsweise von einer Geschwindigkeit, einer Beschleunigung, einer Bewegungsrichtung, einer Position und/oder vergangenen Werten von Bewegungsparametern abhängen. Insbesondere kann anhand vergangener Werte von Bewegungsparametern erfasst werden, ob in der derzeitigen Fahrsituation viele Fahrmanöver durchgeführt werden. Dabei können als Parameter der Bewegung des Fahrzeugs in einem weiteren Sinne auch Daten eines Navigationsgeräts verstanden werden, insbesondere kann berücksichtigt werden, ob in kurzer Zeit neue Fahranweisungen ausgegeben werden sollen, und daher Fahrmanöver auszuführen sind. Beispielsweise kann, wenn eine hohe Geschwindigkeit des Fahrzeugs erfasst wird, zumindest ein Kartenausschnitt mit höherem oder niedrigerem Maßstab angezeigt werden, um eine bessere Orientierung des Fahrers zu erlauben. Ferner kann auf diese Weise beeinflusst werden, wie viele Details ein Kartenausschnitt umfasst, wobei typischerweise das Erfassen vieler Details mehr Aufmerksamkeit beansprucht als bei weniger Details.

Bei einer Weiterbildung umfasst die Kartendarstellung eine Darstellung einer Route, wobei die Darstellung der Route ein von der aktuellen Position des Fahrzeugs ausgehendes längliches graphisches Element umfasst. Dadurch kann vorteilhafterweise dargestellt werden, entlang welcher geplanten Route sich das Fahrzeug bewegen soll. Es wird daher die Orientierung innerhalb der Anzeige erleichtert. Die Darstellung der Route kann dabei nach an sich bekannten Verfahren erfolgen, beispielsweise kann ein Weg, entlang dem das Fahrzeug geführt werden soll, durch eine veränderte Farbe oder sonstige graphische Hervorhebung gegenüber anderen Wegen markiert werden. Es kann ferner ein "Fahrschlauch" dargestellt werden, bei dem eine körperlich erscheinende Markierung entlang der Route dargestellt wird.

Bei einer Weiterbildung umfasst die Kartendarstellung eine zweidimensionale oder dreidimensionale Darstellung. Dadurch kann vorteilhafterweise eine besonders deutliche und ästhetische Darstellung erzeugt werden. Die Darstellung kann dabei nach an sich bekannten Verfahren erfolgen, wobei insbesondere die gleiche Art der Darstellung für beide Anzeigeflächen verwendet wird. Es kann ferner in Abhängigkeit von dem Betriebsmodus ein Umschalten zwischen zwei- und dreidimensionaler Darstellung durchgeführt werden.

Das erfindungsgemäße Anzeigesystem in einem Fahrzeug umfasst zumindest eine erste und eine zweite Anzeigefläche, wobei die Anzeigeflächen zueinander beabstandet angeordnet sind und das Anzeigesystem einen ersten und einen zweiten Betriebsmodus aufweist. Es umfasst ferner ein Navigationsgerät, das ausgebildet ist, Navigationsdaten zu erfassen und anhand der erfassten Navigationsdaten eine Kartendarstellung zu erzeugen, wobei die Kartendarstellung eine aktuelle Position des Fahrzeugs umfasst. Es umfasst ferner eine Steuereinheit, die ausgebildet ist, anhand der Kartendarstellung Anzeigedaten für zumindest eine erste und eine zweite Teilanzeige zu erzeugen, wobei die erste Anzeigefläche ausgebildet ist, die erste Teilanzeige anzuzeigen, und die zweite Anzeigefläche ausgebildet ist, die zweite Teilanzeige anzuzeigen. Dabei umfasst die erste Teilanzeige einen ersten Kartenausschnitt und die zweite Teilanzeige einen zweiten Kartenausschnitt. Der erste und der zweite Kartenausschnitt umfassen dabei verschiedene Ausschnitte der Kartendarstellung. Das Anzeigesystem ist sie dabei so eingerichtet, dass die Gesamtheit der beiden Kartenausschnitte bildet eine zusammenhängende Repräsentation von Daten der Kartendarstellung, wobei der erste und der zweite Kartenausschnitt zueinander in einer geographischen Relation stehen. Dabei wird die geographische Relation anhand der relativen Anordnung der ersten zur zweiten Anzeigefläche bestimmt. Ferner wird in Abhängigkeit von dem Betriebsmodus des Anzeigesystems eine der zumindest zwei Anzeigeflächen bestimmt, und der Kartenausschnitt der Teilanzeige, die von der bestimmten Anzeigefläche anzeigt wird, ist so gebildet, dass der Kartenausschnitt die aktuelle Position des Fahrzeugs umfasst.

Das erfindungsgemäße Anzeigesystem ist insbesondere ausgebildet, das vorstehend beschriebene erfindungsgemäße Verfahren zu implementieren. Das Anzeigesystem weist somit dieselben Vorteile auf wie das erfindungsgemäße Verfahren.

Bei einer Ausbildung des erfindungsgemäßen Anzeigesystems ist eine Recheneinheit ausgebildet, Anwendungsdaten zu erzeugen und die Anwendungsdaten in Abhängigkeit von dem Betriebsmodus durch die zumindest zwei Anzeigeflächen auszugeben. Dadurch können vorteilhafterweise Informationen von weiteren Anwendungen ausgegeben werden, wobei anhand des Betriebsmodus eine Umschaltung zwischen verschiedenen Anzeigen bereitgestellt wird.

Bei einer weiteren Ausbildung sind die erste und die zweite Anzeigefläche fest im Fahrzeug angeordnet. Dadurch ist vorteilhafterweise die relative Anordnung der ersten zur zweiten Anzeigefläche fest definiert. Insbesondere kann dadurch die geographische Relation zwischen den Kartenausschnitten ebenfalls einfach bestimmt werden.

Ferner kann zumindest eine Anzeigefläche als mobile Einheit ausgeführt werden oder innerhalb des Fahrzeugs verschiebbar sein. In diesem Fall kann die Anordnung der Anzeigeflächen zueinander neu bestimmt werden, oder es kann eine hypothetische feste Anordnung der Anzeigeflächen angenommen werden.

Bei einer Weiterbildung sind die Anzeigeflächen relativ zueinander seitlich angeordnet. Dadurch kann vorteilhafterweise durch die inhaltliche Verknüpfung der beiden Anzeigeflächen der Eindruck einer zusammenhängenden Anzeige über eine größere Breite hinweg erzeugt werden. Als seitliche Richtung ist dabei eine Richtung anzusehen, die im Wesentlichen parallel zu einer waagrechten Ebene, und im Wesentlichen senkrecht zur Fahrtrichtung des Fahrzeugs verläuft. Die Anzeigeflächen sind dabei nicht notwendigerweise auf gleicher Höhe seitlich nebeneinander angeordnet, sondern es kann ein Höhenversatz bestehen.

Beim Bestimmen der geographischen Relation der Kartenausschnitte zueinander kann lediglich ein Teil der relativen Anordnung der Anzeigeflächen berücksichtigt werden, so kann beispielsweise ignoriert werden, dass die Anzeigeflächen auf verschiedener Höhe angeordnet sind.

Bei einer Weiterbildung sind die Anzeigeflächen von einem Mitteldisplay, einem Infotainmentbildschirm und/oder einem Kombiinstrument umfasst. Insbesondere ist zumindest eine der Anzeigeflächen an einem Armaturenbrett oder eine Mittelkonsole des Fahrzeugs angeordnet. Dadurch kann vorteilhafterweise die Anordnung der Anzeigeflächen so erfolgen, dass der Fahrer, für den die Kartendarstellung typischerweise von besonders großem Interesse ist, Informationen zur geographischen Umgebung und Routenführung schnell und einfach erfassen kann.

Die Erfindung wird nun anhand von Ausführungsbeispielen mit Bezug zu den Zeichnungen erläutert.
- Figur 1: zeigt ein Ausführungsbeispiel des erfindungsgemäßen Anzeigesystems,
- Figuren 2A und 2B: zeigen Teilanzeigen für ein Ausführungsbeispiel des erfindungsgemäßen Verfahrens und
- Figuren 3A und 3B: zeigen Beispiele von Teilanzeigen für einen weiteren Betriebsmodus des Anzeigesystems.

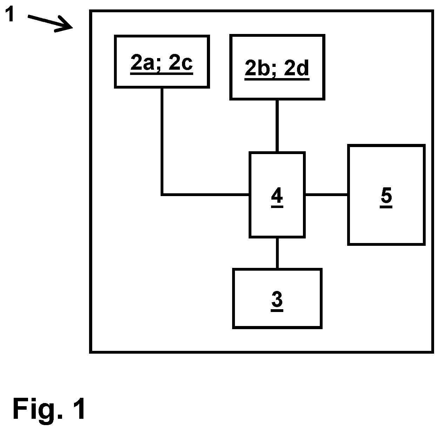

Mit Bezug zu Figur 1 wird ein Ausführungsbeispiel des erfindungsgemäßen Anzeigesystems erläutert.

Ein Fahrzeug 1 umfasst eine erste Anzeigefläche 2a und eine zweite Anzeigefläche 2b. Die Anzeigeflächen 2a, 2b sind mit einer Steuereinheit 4 gekoppelt. Die Steuereinheit 4 ist ferner mit einer Recheneinheit 5 und einem Navigationsgerät 3 gekoppelt.

In dem dargestellten Ausführungsbeispiel ist die zweite Anzeigefläche 2b seitlich rechts von der ersten Anzeigefläche 2a am Armaturenbrett des Fahrzeugs 1 angeordnet. Insbesondere ist in diesem Beispiel die erste Anzeigefläche 2a Teil des Kombiinstruments des Fahrzeugs 1 und die zweite Anzeigefläche Teil eines Mitteldisplays, wie es typischerweise zur Ausgabe von Inhalten eines Infotainmentsystems genutzt wird.

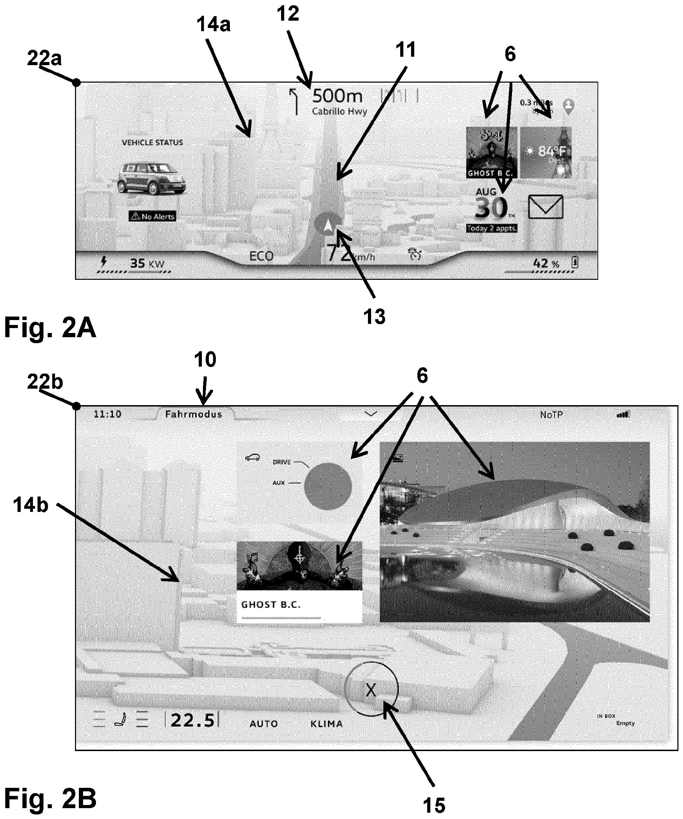

Mit Bezug zu den Figuren 1, 2A und 2B wird ein Ausführungsbeispiel des erfindungsgemäßen Verfahrens erläutert. Es wird dabei von dem oben mit Bezug zu Figur 1 erläuterten Ausführungsbeispiel des erfindungsgemäßen Systems ausgegangen.

In einem ersten Schritt werden durch das Navigationsgerät 3 Navigationsdaten erfasst. Diese umfassen Daten eines Wegenetzes für das Fahrzeug 1 sowie Daten zu einer geplanten Route für das Fahrzeug 1 entlang des Wegenetzes. Die Navigationsdaten umfassen ferner Fahranweisungen, das heißt Hinweise zum Führen des Fahrzeugs 1, um ein Führen entlang der geplanten Route zu ermöglichen. Ferner umfassen die Navigationsdaten eine aktuelle Position des Fahrzeugs 1. Anhand der erfassten Navigationsdaten wird durch die Recheneinheit 5 eine Kartendarstellung erzeugt, die eine aktuelle Position des Fahrzeugs 1 umfasst.

Die Kartendarstellung wird dabei nach an sich bekannten Verfahren erzeugt und umfasst geographische Daten, insbesondere zu dem Wegenetz, eine Darstellung der geplanten Route sowie eine graphische Darstellung der Position des Fahrzeugs 1 relativ zum Wegenetz. Die Darstellung der Position des Fahrzeugs 1 kann beispielsweise mittels eines graphischen Elements erfolgen, welches insbesondere eine Richtung ausweist, in die sich das Fahrzeug 1 bewegt, beispielsweise einem Pfeil. Die Kartendarstellung kann dabei zweidimensional oder dreidimensional erzeugt werden.

In einem weiteren Schritt werden Anzeigedaten für zwei Teilanzeigen erzeugt, wobei eine erste der beiden Teilanzeigen durch die erste Anzeigefläche 2a und eine zweite Teilanzeige durch die zweite Anzeigefläche 2b angezeigt wird. Die Teilanzeigen umfassen verschiedene Kartenausschnitte der Kartendarstellung. Die zwei verschiedenen Kartenausschnitte sind im Sinne der Erfindung dadurch charakterisiert, dass keiner der Kartenausschnitte den anderen umfasst. Das heißt, für alle Kartenausschnitte ist gegenüber allen anderen Kartenausschnitten eine nicht leere Differenzmenge definiert. Dabei bilden die beiden Kartenausschnitte zusammen eine zusammenhängende Repräsentation von Daten der Kartendarstellung, das heißt, die Teilanzeigen werden so erzeugt, dass der Nutzer aus ihnen Informationen erfassen und zu einem Gesamtbild zusammenführen kann, wobei die dargestellten Kartenausschnitte zusammen Informationen eines gemeinsamen größeren Kartenausschnitts umfassen.

Dabei stehen die beiden Kartenausschnitte in einer geographischen Relation zueinander, sie können beispielsweise an einer Seite aneinander angrenzen. Die Positionen der Kartenausschnitte, beispielsweise definiert durch deren Mittelpunkt, können ferner zueinander versetzt sein. Diese geographische Relation der Kartenausschnitte wird erfindungsgemäß anhand der relativen Anordnung der ersten Anzeigefläche 2a zur zweiten Anzeigefläche 2b bestimmt. Sind also, wie in dem Ausführungsbeispiel, die beiden Anzeigeflächen 2a, 2b seitlich nebeneinander angeordnet, so wird die geographische Relation der Kartenausschnitte in dem Beispiel so bestimmt, dass der Kartenausschnitt der rechten Anzeigefläche 2b seitlich rechts von dem Kartenausschnitt der links angeordneten Anzeigefläche 2a anschließt.

Ferner umfasst der Kartenausschnitt erfindungsgemäß für genau eine bestimmte Anzeigefläche 2c die aktuelle Position des Fahrzeugs 1. Die bestimmte Anzeigefläche 2c, durch welche die Position des Fahrzeugs 1 angezeigt werden soll, wird anhand eines Betriebsmodus des Fahrzeugs 1 bestimmt. Dabei wird der Betriebsmodus durch die Steuereinheit 4 anhand verschiedener Parameter des Fahrzeugs sowie durch eine Nutzereingabe erfasst. Als Parameter des Fahrzeugs 1 zur Erfassung des Betriebsmodus können beispielsweise Fahrparameter erfasst werden, beispielsweise eine Geschwindigkeit, Beschleunigung oder Position des Fahrzeugs 1. Ferner kann eine Nutzereingabe erfasst und zur Bestimmung des Betriebsmodus verwendet werden. Je nach erfassten Betriebsmodus wird die aktuelle Position des Fahrzeugs 1 entweder durch die erste Anzeigefläche 2a oder die zweite Anzeigefläche 2b angezeigt.

Die Kartenausschnitte sind also insbesondere so gebildet, dass die bestimmte Anzeigefläche 2c die aktuelle Position und Umgebung des Fahrzeugs 1 darstellt, während die andere Anzeigefläche 2d die weitere Umgebung, etwa die Peripherie seitlich vom Fahrzeug 1, anzeigt. Anhand des Betriebsmodus wird in dem dargestellten Beispiel die bestimmte Anzeigefläche 2c bestimmt. Die weitere der Anzeigeflächen 2a, 2b ist dann die andere Anzeigefläche 2d.

Dabei wird insbesondere die geographische Relation der Kartenausschnitte zueinander unverändert, das heißt, konstant gehalten, sodass bei einer Veränderung eines Kartenausschnitts, beispielsweise weil sich das Fahrzeug 1 entlang des Wegenetzes bewegt, ebenfalls zu einer Änderung des anderen Kartenausschnitts führt. Insbesondere werden dabei die Teilanzeigen für die beiden Anzeigeflächen 2a, 2b so erzeugt, dass der Nutzer eine Fortsetzung der Darstellung der Kartenausschnitte über die beiden Anzeigeflächen 2a, 2d wahrnimmt. Beispielsweise können sich die Teilanzeigen während einer Kurvenfahrt des Fahrzeugs so verändern, dass dieser Eindruck einer fortgesetzten Ansicht weiter bestehen bleibt, während beispielsweise eine Rotation um die aktuelle Position des Fahrzeugs 1 dargestellt wird.

In dem Ausführungsbeispiel stellen die Figuren 2A und 2B den Fall dar, dass anhand des Betriebsmodus die erste Anzeigefläche im Kombiinstrument des Fahrzeugs 1 als die bestimmte Anzeigefläche 2c bestimmt wurde, durch die der Kartenausschnitt mit der aktuellen Position des Fahrzeugs 1 ausgegeben wird. Es wurde zudem die zweite Anzeigefläche, hier das Mitteldisplay, als andere Anzeigefläche 2d bestimmt, durch die Kartendaten der Peripherie angezeigt werden.

Die erste Teilanzeige 22a umfasst einen Kartenausschnitt 14a mit einer aktuellen Position 13 des Fahrzeugs 1. Diese wird in dem Beispiels als graphisches Symbol mit einem Pfeil dargestellt, wobei die Fahrtrichtung des Fahrzeugs entlang einer Route 11 dargestellt wird. Die Darstellung der Route 11 erfolgt als Fahrschlauch 11. Der Kartenausschnitt 14a wird perspektivisch dreidimensional dargestellt, insbesondere umfasst er dreidimensionale Darstellungen von Gebäuden in der Umgebung der Route 11. Die erste Teilanzeige 22a umfasst ferner eine Fahranweisung 12, in dem dargestellten Fall sollen in 500 m Entfernung bei einem Abbiegen nach links auf den Cabrillo Highway von drei Fahrspuren die zwei linken zur Verfügung stehen.

Die erste Teilanzeige 22a umfasst ferner Anwendungsanzeigen 6, im dargestellten Fall Widgets 6. Diese sind Anwendungsprogrammen der Recheneinheit 5 zugeordnet, insbesondere werden Daten über eine Temperatur sowie ein derzeit wiedergegebenes Musikstück ausgegeben. Die erste Teilanzeige 22a kann ferner weitere Informationen umfassen, beispielsweise zu einem Fahrzeugzustand sowie einem Fahrzustand, im dargestellten Fall wird beispielsweise die Geschwindigkeit des Fahrzeugs 1 angezeigt.

Die zweite Teilanzeige 22b, dargestellt in Figur 2B, umfasst einen weiteren Kartenausschnitt 14b, der eine seitliche, in diesem Fall örtliche, Fortsetzung des Kartenausschnitts 14a der ersten Teilanzeige 22a darstellt. Auch hier erfolgt eine dreidimensionale Darstellung, insbesondere von Gebäuden, in der seitlich rechts angeordneten Peripherie der Fahrtroute des Fahrzeugs 1. Es werden ebenfalls Widgets 6 angezeigt, die etwa Daten zum Betrieb des Fahrzeugs 1 sowie derzeit wiedergegebene Multimediainhalte, insbesondere Musik, umfassen. Ferner wird ein der Route zugeordnetes Bild einer Sehenswürdigkeit in Zusammenhang mit der geplanten Route angezeigt.

In dem Ausführungsbeispiel umfasst die zweite Teilanzeige ferner eine Betriebsmodusanzeige 10, wobei hier angezeigt wird, dass gerade der "Fahrmodus" aktiv ist. Dies bedeutet im vorliegenden Fall, dass der Fahrer hohe Aufmerksamkeit auf die Navigation entlang der Route richten muss. Daher werden im Kombiinstrument in der Blickrichtung des Fahrers Daten zu der Navigation angezeigt, während in der zweiten Teilanzeige 22b auf dem Mitteldisplay eine Anzeige von fahrtbezogenen Daten erfolgt. Das Mitteldisplay 2b umfasst insbesondere eine berührungsempfindliche Oberfläche als Eingabeeinheit, wobei die zweite Teilanzeige 22b eine Bedienfläche 15 umfasst, durch die ein Umschalten des Bedienmodus ermöglicht wird. Betätigt der Nutzer die Bedienfläche 15, so wird ein Betriebsmodusänderungssignal erzeugt. Die Steuereinheit 4 erfasst dadurch, dass ein anderer Betriebsmodus gewählt werden soll, wobei in dem dargestellten Beispiel lediglich zwei Betriebsmodi definiert sind.

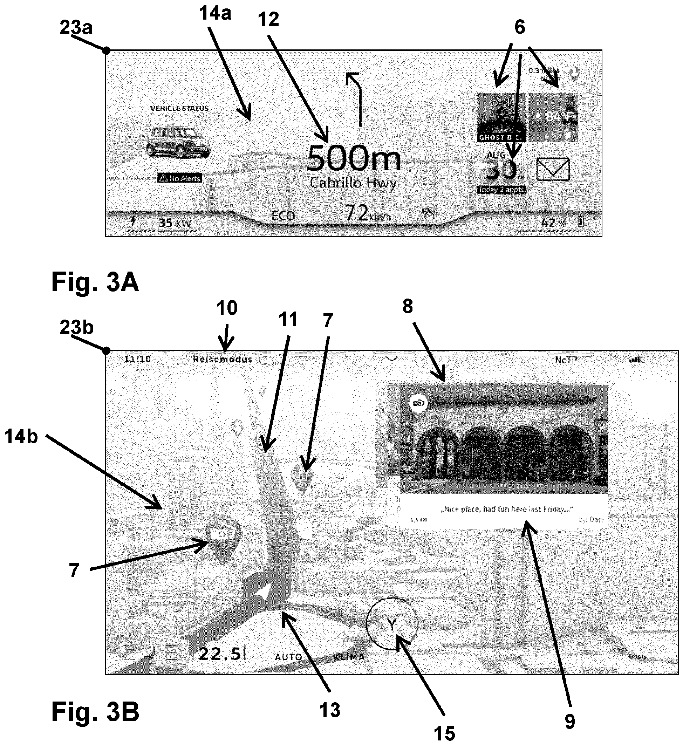

Mit Bezug zu den Figuren 3A und 3B werden Teilanzeigen für einen weiteren Betriebsmodus des Anzeigesystems erläutert. Dabei wird von dem erfindungsgemäßen System und Verfahren wie oben mit Bezug zu den Figuren 1, 2A und 2B erläutert, ausgegangen.

Dabei wird die erste Teilanzeige 23a durch das Kombiinstrument mit der ersten Anzeigefläche 2a ausgegeben, während die zweite Teilanzeige 23b durch die zweite Anzeigefläche 2b des Mitteldisplays angezeigt wird. Die erste Teilanzeige 23a umfasst die Fahranweisung 12, die in dem Beispiel im zentralen Bereich der zweiten Teilanzeige 23a angezeigt wird. Ferner umfasst sie den Kartenausschnitt 14a, wobei hier eine Peripherie der geplanten Fahrtroute angezeigt wird. Weiterhin umfasst die erste Teilanzeige 23a Widgets 6 zur Anzeige von Anwendungsdaten.

Die zweite Teilanzeige 23b umfasst die Betriebsmodusanzeige 10, die in diesem Fall anzeigt, dass als Betriebsmodus der "Reisemodus" aktiv ist. Sie umfasst den Kartenausschnitt 14b mit der aktuellen Position 13 des Fahrzeugs 1 sowie entlang der Route 11 Zwischenziele 7. Diese sind in dem dargestellten Ausführungsbeispiel als tropfenartige Symbole dargestellt, wobei ferner symbolisiert wird, Inhalte welcher Art mit den Zwischenzielen 7 verknüpft sind. Dies können beispielsweise Multimediainhalte sein, die mit dem Ort der Route verknüpft sind, ferner können beispielsweise Daten eines Adressbuchs oder einer anderen Datenbank mit Orten entlang der Route verknüpft sein. Die zweite Teilanzeige umfasst ferner in dem dargestellten Beispiel eine Ausgabe einer anderen Anwendung als dies für den Fahrmodus definiert ist. Insbesondere wird hierbei eine Zwischenzielanzeige 8 dargestellt, wobei dies insbesondere einen Bewertungstext 9 umfasst.

In dem dargestellten Fall kann der Nutzer die Zwischenzielanzeige 8 verwenden, um nähere Informationen zu Zwischenzielen 7 entlang der Route 11 aufzurufen. Dabei können Bilddaten und Textdaten sowie weitere Multimediainhalte mit einzelnen Zwischenzielen 7 verknüpft werden. Insbesondere können die Daten aus dem Internet oder einer Datenbank erfasst werden. Insbesondere ist hierbei eine Bedienhandlung definiert, durch die der Nutzer zwischen verschiedenen Zwischenzielen 7 umschalten kann, wobei insbesondere ein Durchblättern dargestellt werden kann, wobei nacheinander die nächsten Zwischenziele 7 entlang der Route 11 dargestellt werden. Es wird also im Reisemodus eine Auswahl der dargestellten Anwendungsdaten und Widgets 6 so erzeugt, dass eine Reiseplanung und Informationserfassung im Zusammenhang mit der Fahrtroute ermöglicht wird.

Die zweite Teilanzeige 23b umfasst ferner die Bedienfläche 15, durch deren Betätigung der Nutzer in den Fahrmodus umschalten kann.

Insbesondere wird erfindungsgemäß anhand des Betriebsmodus des Anzeigesystems bestimmt, durch welche der Anzeigeflächen die aktuelle Position des Fahrzeugs 1 ausgegeben wird. Ferner kann anhand des Betriebsmodus eine situationsspezifische oder betriebsmodusspezifische Auswahl von Datenanzeigen weiterer Anwendungen der Recheneinheit 5 erzeugt werden, sodass abhängig von dem Betriebsmodus verschiedene Daten zusätzlich zu den Kartenausschnitten angezeigt werden können.

Bei einem weiteren Ausführungsbeispiel wird der Fahrmodus alternativ oder zusätzlich anhand der Navigationsdaten erfasst. Insbesondere wird dabei erfasst, welche Fahranweisungen der Nutzer in näherer Zukunft befolgen soll, beispielsweise wird berücksichtigt, ob besonders viele oder besonders schwierige Fahrmanöver durchzuführen sind. Insbesondere wird dabei die bestimmte Anzeigefläche 2c, durch die die aktuelle Position des Fahrzeugs 1 ausgegeben wird, so bestimmt, dass der Fahrer leicht die Position des Fahrzeugs 1 und die nähere Umgebung in dem Kartenausschnitt des Kombiinstruments 2a erfassen kann.

### Bezugszeichenliste

- 1: Fahrzeug
- 2a: Erste Anzeigefläche; Kombiinstrument
- 2b: Zweite Anzeigefläche; Mitteldisplay
- 2c: Bestimmte Anzeigefläche
- 2d: Andere Anzeigefläche
- 3: Navigationsgerät
- 4: Steuereinheit
- 5: Recheneinheit
- 6: Anwendungsanzeige; Widget
- 7: Zwischenziel
- 8: Zwischenzielanzeige
- 9: Bewertungstext
- 10: Betriebsmodusanzeige
- 11: Route; Fahrschlauch
- 12: Fahranweisung
- 13: Aktuelle Position des Fahrzeugs (Symbol)
- 14a, 14b: Kartenausschnitte
- 15: Bedienfläche
- 22a, 23a: Erste Teilanzeige
- 22b, 23b: Zweite Teilanzeige

## Patentansprüche

1. Verfahren zum Betreiben eines Anzeigesystems in einem Fahrzeug (1) mit zumindest einer ersten (2a) und einer zweiten Anzeigefläche (2b), wobei die Anzeigeflächen (2a, 2b, 2c, 2d) zueinander beabstandet angeordnet sind und das Anzeigesystem einen ersten und einen zweiten Betriebsmodus aufweist;
wobei bei dem Verfahren
Navigationsdaten erfasst werden und anhand der erfassten Navigationsdaten eine Kartendarstellung erzeugt wird, wobei die Kartendarstellung eine aktuelle Position des Fahrzeugs (1) umfasst;
anhand der Kartendarstellung Anzeigedaten für zumindest eine erste (22a, 23a) und eine zweite Teilanzeige (22b, 23b) erzeugt werden, wobei die erste Teilanzeige (22a, 23a) durch die erste Anzeigefläche (2a) und die zweite Teilanzeige (22b, 23b) durch die zweite Anzeigefläche (2b) angezeigt wird; wobei
die erste Teilanzeige (22a, 23a) einen ersten Kartenausschnitt und die zweite Teilanzeige (22b, 23b) einen zweiten Kartenausschnitt umfasst, wobei der erste und der zweite Kartenausschnitt verschiedene Ausschnitte der Kartendarstellung umfassen, wobei
die Gesamtheit der beiden Kartenausschnitte eine zusammenhängende Repräsentation von Daten der Kartendarstellung bildet, wobei der erste und der zweite Kartenausschnitt zueinander in einer geographischen Relation stehen, wobei die geographische Relation anhand der relativen Anordnung der ersten (2a) zur zweiten Anzeigefläche (2b) bestimmt wird, **dadurch gekennzeichnet, dass** in Abhängigkeit von dem Betriebsmodus des Anzeigesystems eine (2c) der zumindest zwei Anzeigeflächen (2a, 2b, 2c, 2d) bestimmt wird und der Kartenausschnitt der Teilanzeige (22a, 22b, 23a, 23b), die von der bestimmten Anzeigefläche (2c) angezeigt wird, so gebildet wird, dass der Kartenausschnitt die aktuelle Position des Fahrzeugs (1) umfasst.

2. Verfahren gemäß Anspruch 1,
**dadurch gekennzeichnet, dass**
ein Betriebsmodusänderungssignal erfasst wird und anhand des Betriebsmodusänderungssignals die erste (22a, 23a) und die zweite Teilanzeige (22b, 23b) aktualisiert werden.

3. Verfahren gemäß Anspruch 2,
**dadurch gekennzeichnet, dass**
die aktualisierten Teilanzeigen (22a, 22b, 23a, 23b) so gebildet werden, dass die aktuelle Position des Fahrzeugs (1) durch die andere (2d) als die zunächst bestimmte Anzeigefläche (2c) angezeigt wird.

4. Verfahren gemäß Anspruch 2 oder 3,
**dadurch gekennzeichnet, dass**
das Betriebsmodusänderungssignal anhand einer Nutzereingabe erfasst wird, wobei die Nutzereingabe eine Betätigung eines Bedienelements oder eine Geste umfasst.

5. Verfahren gemäß Anspruch 2 oder 3,
**dadurch gekennzeichnet, dass**
das Betriebsmodusänderungssignal anhand von Fahrparametern automatisch erzeugt wird.

6. Verfahren gemäß einem der vorhergehenden Ansprüche,
**dadurch gekennzeichnet, dass**
durch die zumindest zwei Anzeigeflächen (2a, 2b, 2c, 2d) ferner Anwendungsdaten ausgegeben werden, wobei die ausgegebenen Anwendungsdaten in Abhängigkeit von dem Betriebsmodus des Anzeigesystems gebildet werden.

7. Verfahren gemäß Anspruch 6, **dadurch gekennzeichnet, dass**
die Anwendungsdaten eine Fahranweisung (12) umfassen.

8. Verfahren gemäß einem der vorhergehenden Ansprüche,
**dadurch gekennzeichnet, dass**
der erste und zweite Kartenausschnitt ferner in Abhängigkeit von Parametern der Bewegung des Fahrzeugs (1) bestimmt werden.

9. Verfahren gemäß einem der vorhergehenden Ansprüche,
**dadurch gekennzeichnet, dass**
die Kartendarstellung eine Darstellung einer Route (11) umfasst, wobei die Darstellung der Route (11) ein von der aktuellen Position (13) des Fahrzeugs (1) ausgehendes längliches graphisches Element (11) umfasst.

10. Verfahren gemäß einem der vorhergehenden Ansprüche,
**dadurch gekennzeichnet, dass**
die Kartendarstellung eine zweidimensionale oder dreidimensionale Darstellung umfasst.

11. Anzeigesystem in einem Fahrzeug (1) mit
zumindest einer ersten und einer zweiten Anzeigefläche (2a, 2b, 2c, 2d), wobei die Anzeigeflächen (2a, 2b, 2c, 2d) zueinander beabstandet angeordnet sind, wobei das Anzeigesystem einen ersten und einen zweiten Betriebsmodus aufweist;
einem Navigationsgerät (3), das ausgebildet ist, Navigationsdaten zu erfassen und anhand der erfassten Navigationsdaten eine Kartendarstellung zu erzeugen, wobei die Kartendarstellung eine aktuelle Position des Fahrzeugs (1) umfasst; und
einer Steuereinheit (4), die ausgebildet ist, anhand der Kartendarstellung Anzeigedaten für zumindest eine erste und eine zweite Teilanzeige (22a, 22b, 23a, 23b) zu erzeugen, wobei die erste Anzeigefläche (2a) ausgebildet ist, die erste Teilanzeige (22a, 23a) anzuzeigen, und die zweite Anzeigefläche (2b) ausgebildet ist, die zweite Teilanzeige (22b, 23b) anzuzeigen; wobei
die erste Teilanzeige (22a, 23a) einen ersten Kartenausschnitt und die zweite Teilanzeige (22b, 23b) einen zweiten Kartenausschnitt umfasst, wobei der erste und der zweite Kartenausschnitt verschiedene Ausschnitte der Kartendarstellung umfassen, wobei
das Anzeigesystem so eingerichtet ist, dass
die Gesamtheit der beiden Kartenausschnitte eine zusammenhängende Repräsentation von Daten der Kartendarstellung bildet, wobei der erste (2a) und der zweite Kartenausschnitt (2b) zueinander in einer geographischen Relation stehen, wobei die geographische Relation anhand der relativen Anordnung der ersten (2a) zur zweiten Anzeigefläche (2b) bestimmt wird, **dadurch gekennzeichnet, dass** in Abhängigkeit von dem Betriebsmodus des Anzeigesystems eine (2c) der zumindest zwei Anzeigeflächen (2a, 2b, 2c, 2d) bestimmt wird und der Kartenausschnitt der Teilanzeige (22a, 22b, 23a, 23b), die von der bestimmten Anzeigefläche (2c) angezeigt wird, so gebildet ist, dass der Kartenausschnitt die aktuelle Position des Fahrzeugs (1) umfasst.

12. Anzeigesystem gemäß Anspruch 11,
**dadurch gekennzeichnet, dass**
eine Recheneinheit (5) ausgebildet ist, Anwendungsdaten zu erzeugen und die Anwendungsdaten in Abhängigkeit von dem Betriebsmodus durch die zumindest zwei Anzeigeflächen (2a, 2b, 2c, 2d) auszugeben.

13. System gemäß Anspruch 11 oder 12,
**dadurch gekennzeichnet, dass**
die erste und die zweite Anzeigefläche (2a, 2b, 2c, 2d) fest im Fahrzeug (1) angeordnet sind

14. System gemäß einem der Ansprüche 11 bis 13,
**dadurch gekennzeichnet, dass**
die Anzeigeflächen (2a, 2b, 2c, 2d) relativ zueinander seitlich angeordnet sind.

15. System gemäß einem der Ansprüche 11 bis 14,
**dadurch gekennzeichnet, dass**
die Anzeigeflächen (2a, 2b, 2c, 2d) von einem Mitteldisplay (2b), einem Infotainmentbildschirm und/oder einem Kombiinstrument (2a) des Fahrzeugs (1) umfasst sind.

## Claims

1. A method for operating a display system in a vehicle (1) having at least one first display surface (2a) and one second display surface (2b), wherein the display surfaces (2a, 2b, 2c, 2d) are arranged spaced apart from one another and the display system has a first and a second operating mode;
wherein in the method
navigation data are acquired and a map display is generated on the basis of the acquired navigation data, wherein the map display comprises a current position of the vehicle (1);
display data for at least one first partial display (22a, 23a) and a second partial display (22b, 23b) are generated on the basis of the map display, wherein the first partial display (22a, 23a) is displayed by the first display surface (2a), and the second partial display (22b, 23b) is displayed by the second display surface (2b); wherein
the first partial display (22a, 23a) comprises a first map excerpt and the second partial display (22b, 23b) comprises a second map excerpt, wherein the first and the second map excerpts comprise different excerpts of the map display, wherein
the entirety of the two map excerpts forms a coherent representation of data of the map display, wherein the first and the second map excerpts have a geographical relationship with one another, wherein the geographical relationship is determined on the basis of the relative arrangement of the first display surface (2a) to the second display surface (2b), **characterized in that**
one (2c) of the at least two display surfaces (2a, 2b, 2c, 2d) is determined as a function of the operating mode of the display system and the map excerpt of the partial display (22a, 22b, 23a, 23b), which is displayed by the determined display surface (2c), is formed in such a way that the map excerpt comprises the current position of the vehicle (1).

2. A method according to Claim 1,
**characterized in that**
an operating mode change signal is acquired and on the basis of the operating mode change signal the first partial display (22a, 23a) and the second partial display (22b, 23b) are updated.

3. A method according to Claim 2,
**characterized in that**
the updated partial displays (22a, 22b, 23a, 23b) are formed in such a way that the current position of the vehicle (1) is displayed by the other display surface (2d) than the initially determined display surface (2c).

4. A method according to Claim 2 or 3,
**characterized in that**
the operating mode change signal is acquired on the basis of a user input, wherein the user input comprises an actuation of a control element and a gesture.

5. A method according to Claim 2 or 3,
**characterized in that**
the operating mode change signal is automatically generated on the basis of driving parameters.

6. A method according to any one of the preceding claims
**characterized in that**
application data are additionally output by the at least two display surfaces (2a, 2b, 2c, 2d), wherein the outputted application data are formed as a function of the operating mode of the display system.

7. A method according to Claim 6,
**characterized in that**
the application data comprise a driving instruction (12).

8. A method according to any one of the preceding claims,
**characterized in that**
the first and second map excerpts are additionally determined as a function of parameters of the movement of the vehicle (1).

9. A method according to any one of the preceding claims,
**characterized in that**
the map display comprises a display of a route (11), wherein the display of the route (11) comprises an elongate graphical element (11) emanating from the current position (13) of the vehicle (1).

10. A method according to any one of the preceding claims
**characterized in that**
the map display comprises a two-dimensional or three-dimensional display.

11. A display system in a vehicle (1) having
at least one first and one second display surface (2a, 2b, 2c, 2d), wherein the display surfaces (2a, 2b, 2c, 2d) are arranged spaced apart from one another, wherein the display system has a first and a second operating mode;
a navigation device (3), which is designed to acquire navigation data and to generate a map display on the basis of the acquired navigation data, wherein the map display comprises a current position of the vehicle (1); and
a control unit (4), which is designed, to generate display data for at least one first and one second partial display (22a, 22b, 23a, 23b) on the basis of the map display, wherein the first display surface (2a) is designed to display the first partial display (22a, 23a), and the second display surface (2b) is designed to display the second partial display (22b, 23b); wherein
the first partial display (22a, 23a) comprises a first map excerpt and the second partial display (22b, 23b) comprises a second map excerpt, wherein the first and the second map excerpts comprise different excerpts of the map display, wherein
the display system is configured such that
the entirety of the two map excerpts forms a coherent representation of data of the map display, wherein the first (2a) and the second map excerpts (2b) have a geographical relationship with one another, wherein the geographical relationship is determined on the basis of the relative arrangement of the first display surface (2a) to the second display surface (2b), **characterized in that**
one (2c) of the at least two display surfaces (2a, 2b, 2c, 2d) is determined as a function of the operating mode of the display system and the map excerpt of the partial display (22a, 22b, 23a, 23b), which is displayed by the determined display surface (2c), is formed in such a way that the map excerpt comprises the current position of the vehicle (1).

12. A display system according to Claim 11,
**characterized in that**
a computer unit (5) is designed to generate application data and to output the application data as a function of the operating mode by the at least two display surfaces (2a, 2b, 2c, 2d).

13. A system according to Claim 11 or 12,
**characterized in that**
the first and the second display surface (2a, 2b, 2c, 2d) are arranged fixedly in the vehicle (1).

14. A system according to any one of Claims 11 to 13,
**characterized in that**
the display surfaces (2a, 2b, 2c, 2d) are arranged laterally relative to each other.

15. A system according to any one of Claims 11 to 14,
**characterized in that**
the display surfaces (2a, 2b, 2c, 2d) are comprised of a central display (2b), an infotainment screen and/or a combination instrument (2a) of the vehicle (1).

## Revendications

1. Procédé destiné à faire fonctionner un système d'affichage dans un véhicule (1) avec au moins une première (2a) et une deuxième surface d'affichage (2b), les surfaces d'affichage (2a, 2b, 2c, 2d) étant disposées à distance les unes des autres, et le système d'affichage comportant un premier et un deuxième mode de fonctionnement ;
dans lequel, dans le procédé,
des données de navigation sont détectées, et une représentation cartographique est produite à l'aide des données de navigation détectées, la représentation cartographique comprenant une position actuelle du véhicule (1) ;
des données d'affichage pour au moins un premier (22a, 23a) et un deuxième affichage partiel (22b, 23b) sont produites à l'aide de la représentation cartographique, le premier affichage partiel (22a, 23a) étant affiché par la première surface d'affichage (2a), et le deuxième affichage partiel (22b, 23b) étant affiché par la deuxième surface d'affichage (2b) ;
le premier affichage partiel (22a, 23a) comprenant un premier extrait de carte, et le deuxième affichage partiel (22b, 23b) comprenant un deuxième extrait de carte, le premier et le deuxième extrait de carte comprenant différents extraits de la représentation cartographique,
la totalité des deux extraits de carte formant une représentation continue de données de la représentation cartographique, le premier et le deuxième extrait de carte étant dans une relation géographique l'un avec l'autre, la relation géographique étant définie à l'aide de l'agencement relatif de la première (2a) par rapport à la deuxième surface d'affichage (2b), **caractérisé en ce**
**qu'**une (2c) des au moins deux surfaces d'affichage (2a, 2b, 2c, 2d) est définie en fonction du mode de fonctionnement du système d'affichage, et l'extrait de carte de l'affichage partiel (22a, 22b, 23a, 23b) qui est affiché par la surface d'affichage (2c) définie est formé de telle sorte que l'extrait de carte comprend la position actuelle du véhicule (1) .

2. Procédé selon la revendication 1,
**caractérisé en ce**
**qu'**un signal de modification du mode de fonctionnement est détecté et, à l'aide du signal de modification du mode de fonctionnement, le premier (22a, 23a) et le deuxième affichage partiel (22b, 23b) sont actualisés.

3. Procédé selon la revendication 2,
**caractérisé en ce que**
les affichages partiels (22a, 22b, 23a, 23b) actualisés sont formés de telle sorte que la position actuelle du véhicule (1) est affichée par la surface d'affichage (2d) autre que la surface d'affichage (2c) définie d'abord.

4. Procédé selon la revendication 2 ou 3,
**caractérisé en ce que**
le signal de modification du mode de fonctionnement est détecté à l'aide d'une entrée d'utilisateur, l'entrée d'utilisateur comprenant un actionnement d'un élément de manoeuvre ou un geste.

5. Procédé selon la revendication 2 ou 3,
**caractérisé en ce que**
le signal de modification du mode de fonctionnement est produit automatiquement à l'aide de paramètres de conduite.

6. Procédé selon l'une des revendications précédentes, **caractérisé en ce que**
des données d'utilisation sont en outre délivrées par les au moins deux surfaces d'affichage (2a, 2b, 2c, 2d), les données d'utilisation délivrées étant formées en fonction du mode de fonctionnement du système d'affichage.

7. Procédé selon la revendication 6,
**caractérisé en ce que**
les données d'utilisation comprennent une instruction de conduite (12).

8. Procédé selon l'une des revendications précédentes, **caractérisé en ce que**
le premier et le deuxième extrait de carte sont en outre définis en fonction de paramètres du mouvement du véhicule (1) .

9. Procédé selon l'une des revendications précédentes, **caractérisé en ce que**
la représentation cartographique comprend une représentation d'un itinéraire (11), la représentation de l'itinéraire (11) comprenant un élément graphique (11) de forme allongée résultant de la position (13) actuelle du véhicule (1).

10. Procédé selon l'une des revendications précédentes, **caractérisé en ce que**
la représentation cartographique comprend une représentation bidimensionnelle ou tridimensionnelle.

11. Système d'affichage dans un véhicule (1), avec
au moins une première et une deuxième surfaces d'affichage (2a, 2b, 2c, 2d), les surfaces d'affichage (2a, 2b, 2c, 2d) étant disposées à distance les unes des autres, le système d'affichage comportant un premier et un deuxième mode de fonctionnement ;
un appareil de navigation (3) qui est constitué pour détecter des données de navigation et pour produire une représentation cartographique à l'aide des données de navigation détectées, la représentation cartographique comprenant une position actuelle du véhicule (1) ; et
une unité de commande (4) qui est constituée pour, à l'aide de la représentation cartographique, produire des données d'affichage pour au moins un premier et un deuxième affichage partiel (22a, 22b, 23a, 23b), la première surface d'affichage (2a) étant constituée pour afficher le premier affichage partiel (22a, 23a), et la deuxième surface d'affichage (2b) étant constituée pour afficher le deuxième affichage partiel (22b, 23b),
le premier affichage partiel (22a, 23a) comprenant une premier extrait de carte, et le deuxième affichage partiel (22b, 23b) comprenant un deuxième extrait de carte, le premier et le deuxième extrait de carte comprenant différents extraits,
le système d'affichage étant agencé de telle sorte que
la totalité des deux extraits de carte forme une représentation continue de données de la représentation cartographique, le premier (2a) et le deuxième extrait de carte (2b) étant dans une relation géographique l'un avec l'autre, la relation géographique étant définie à l'aide de l'agencement relatif de la première (2a) par rapport à la deuxième surface d'affichage (2b), **caractérisé en ce que**,
en fonction du mode de fonctionnement du système d'affichage, une (2c) des au moins deux surfaces d'affichage (2a, 2b, 2c, 2d) est définie, et l'extrait de carte de l'affichage partiel (22a, 22b, 23a, 23b) qui est affiché par la surface d'affichage (2c) définie est formé de telle sorte que l'extrait de carte comprend la position actuelle du véhicule (1).

12. Système d'affichage selon la revendication 11,
**caractérisé en ce**
**qu'**il est constitué une unité de calcul (5) pour produire des données d'utilisation et pour délivrer les données d'utilisation en fonction du mode de fonctionnement par les au moins deux surfaces d'affichage (2a, 2b, 2c, 2d).

13. Système d'affichage selon la revendication 11 ou 12, **caractérisé en ce que**
la première et la deuxième surface d'affichage (2a, 2b, 2c, 2d) sont disposées de façon fixe dans le véhicule (1).

14. Système d'affichage selon l'une des revendications 11 à 13,
**caractérisé en ce que**
les surfaces d'affichage (2a, 2b, 2c, 2d) sont disposées latéralement les unes par rapport aux autres.

15. Système d'affichage selon l'une des revendications 11 à 14,
**caractérisé en ce que**
les surfaces d'affichage (2a, 2b, 2c, 2d) sont englobées par un affichage central (2b), un écran d'infodivertissement et/ou un instrument combiné (2a) du véhicule (1).
